## Europäisches Patentamt

## European Patent Office

## Office européen des brevets

(11) Veröffentlichungsnummer: **0 277 573**
A2

(12) **EUROPÄISCHE PATENTANMELDUNG**

(21) Anmeldenummer: 88101003.7

(22) Anmeldetag: 25.01.88

(51) Int. Cl.⁴: **B29C 31/04** , B29C 31/02 , B29C 67/22 , //B29K105:04

(30) Priorität: 03.02.87 DE 3703132

(43) Veröffentlichungstag der Anmeldung:
10.08.88 Patentblatt 88/32

(84) Benannte Vertragsstaaten:
BE DE FR GB IT NL

(71) Anmelder: **BAYER AG**
**Konzernverwaltung RP Patentabteilung**
**D-5090 Leverkusen 1 Bayerwerk(DE)**

(72) Erfinder: **Giersig, Manfred, Dr.**
**Paracelsusplatz 8**
**D-5000 Köln 80(DE)**
Erfinder: **Herweg, Peter**
**Eichenplaetzchen 20**
**D-5093 Burscheid(DE)**
Erfinder: **Bock, Rolf, Dipl.-Ing.**
**Zedernweg 41**
**D-5090 Leverkusen 3(DE)**

(54) Vorrichtung zum Auftragen eines fliessfähigen, Schaumstoff bildenden Reaktionsgemisches auf eine Unterlage zum Herstellen von Schaumstoffbahnen oder -platten.

㊐ Um bei Vorrichtungen zum Auftragen eine fließfähigen, Schaumfstoff bildenden Reaktionsgemisches noch vor dem Auftragen eine Nachvermischung zu erzielen bzw. gegebenenfalls Gas oder andere Substanzen einzumischen, verwendet man zum Auftragen ein mit dem Mischer (53) verbundenes Rohr (54), welches mindestens eine Auslaßöffnung (56) aufweist und einen Rührer (57) enthält. Gegebenenfalls ist die Rührwelle (58) zum Eintragen von Substanzen hohl ausgebildet und weist Auslaßöffnungen (61) auf.

FIG. 9

EP 0 277 573 A2

## Vorrichtung zum Auftragen eines fließfähigen, Schaumstoff bildenden Reaktionsgemisches auf eine Unterlage zum Herstellen von Schaumstoffbahnen oder -platten

Die Erfindung betrifft eine Vorrichtung zum Auftragen eines fließfähigen, Schaumstoff bildenden Reaktionsgemisches auf eine Unterlage zum Herstellen von Schaumstoffbahnen oder -platten, in Form eines Rohres mit mindestens einer Auslaßöffnung, welches über eine Zuleitung mit einem Mischer verbunden ist.

Bei Vorrichtungen dieser Art wird das dem Rohr zugeführte Reaktionsgemisch ohne wesentliche Nachvermischung lediglich über die Länge des Rohres verteilt und tritt durch die Auslaßöffnung, meist ein Schlitz oder mehrere nebeneinander angeordnete Löcher, aus. Aus Kostengründen verwendet man für die Herstellung von Schaumstoffbahnen, beispielsweise bei Blockschaumanlagen und bei Doppeltransportbändern, oder für die Herstellung von Schaumstoffplatten in diskontinuierlichen Verfahren Misch vorrichtungen mit häufig niedriger Vermischungsintensität. Als Folge davon besitzen die Endprodukte mäßige Qualität. Die inzwischen gestiegenen Qualitätsansprüche erfordern neue Maßnahmen.

Es besteht die Aufgabe, die Mischgüte des Reaktionsgemisches im Sinne einer Qualitätsverbesserung des Endproduktes zu optimieren, wobei die bisher gebräuchlichen, preiswerten Mischvorrichtungen, insbesondere unter Niederdruck arbeitende Rührwerksmischer, beibehalten werden können.

Die Aufgabe wird dadurch gelöst, daß axial im Rohr ein Rührer angeordnet ist.

Dadurch wird erreicht, daß das Reaktionsgemisch eine Nachvermischung erfährt, bevor es auf die Unterlage aufgetragen wird. Diese Nachvermischung bewirkt aufgrund der höheren Vermischungsgüte einen günstigeren Reaktionsablauf und damit ein verbessertes Endprodukt. Es versteht sich, daß die neue Maßnahme zur Nachvermischung nicht nur in Verbindung mit Niederdruck-Mischvorrichtungen, sondern auch mit den höhere Vermischungsqualität bewirkenden Hochdruck-Mischvorrichtungen noch Verbesserungen bringt.

Die neue Ausgestaltung läßt sich für verschiedene, an sich bekannte Arten von Auftragsvorrichtungen anwenden:

Gemäß einer Ausführungsform ist das Rohr an einer hin-und herfahrenden Verteilvorrichtung senkrecht zur Fahrtrichtung angeordnet.

Diese Art des Rohres, jedoch ohne den neuen Rührer, wird im Fachjargon als "Gießharke" bezeichnet.

Gemäß einer anderen Ausführungsform ist das Rohr quer zur Unterlage angeordnet.

Diese Ausführungsform eignet sich für die Anwendung an Transportbändern oder für die diskontinuierliche Herstellung von Schaumstoffplatten in einem fahrbaren Kasten. Die Auslaßöffnung bzw. mehrere nebeneinander angeordnete Auslaßlöcher erstrecken sich über die gewünschte Auftragsbreite. Zur Veränderung der Auftragsbreite läßt sich die Auslaßöffnung bzw. eine Anzahl der Auslaßlöcher gegebenenfalls teilweise abdecken.

Vorzugsweise ist die Weite der Auslaßöffnung verstellbar.

Auf diese Weise läßt sich der Druck bzw. die Anpassung der Austrittsöffnung an die Austragsmenge im Rohr variieren.

Gemäß einer weiteren besonderen Ausführungsform ist der Rührer als Stachelrührer ausgebildet.

Diese Ausführungsform ist wenig aufwendig, besitzt aber auch nur geringe Mischwirkung.

Gemäß einer weiteren Ausführungsform ist der Rührer als Propellerrührer ausgebildet.

Hierdurch wird eine bessere Mischwirkung erzielt, und je nach Anstellung der Rührflügel läßt sich gleichzeitig eine Förderwirkung erreichen. Die Anstellrichtung der Propeller in bezug auf die Drehrichtung der Rührwelle bestimmt die Richtung der Förderung.

Nach einer weiteren Ausführungsform ist der Rührer als Schneckenwelle ausgebildet.

Diese Ausführungsform gewährleistet eine gute Nachvermischung bei gleichzeitiger Förderung.

Gemäß einer weiteren Variante weist der Rührer schräg angestellte Rührscheiben auf.

Auch hier erfolgen Nachvermischung und Transport gleichzeitig. Versieht man die Rührscheiben mit Löchern, so steigert sich die Nachmischwirkung.

Vorzugsweise sind Abstand, Breite und gegebenenfalls Schrägstellung der Rührelemente so aufeinander abgestimmt, daß während einer Umdrehung des Rührers die gesamte Innenwandung des Rohres selbstreinigend überstrichen wird.

Es versteht sich von selbst, daß zwischen der Innenwandung und den Stirnflächen der Rührelemente nur ein enger Spalt vorhanden sein darf. Dadurch wird erreicht, daß keine strömungstoten Zonen entstehen und das Verweilzeitspektrum des Reaktionsgemisches im Rohr so schmal gehalten wird, daß es im Rohr noch nicht ausreagieren kann.

Gemäß einer besonders vorteilhaften Ausführungsform ist der Rührer hohl ausgebildet und weist innerhalb des Rohres Auslaßöffnungen auf und ist außerhalb des Rohres mit einer Beschickungsvorrichtung verbunden.

Dabei reicht es normalerweise, wenn nur die Rührwelle hohl ausgebildet ist und Auslaßöffnungen aufweist. Aber auch die auf der Rührwelle sitzenden Rührelemente selbst können hohl ausgebildet sein und Auslaßöffnungen besitzen. Diese Ausführungsform eignet sich zum Einführen von Gasen, flüssigen Substanzen oder fein gemahlenen oder fein gekörnten Feststoffteilchen, wie z.B. Glasfaserpulver. Erforderlichenfalls ist in der hohlen Rührwelle ein Förderelement, z.B. eine Förderschnecke, angeordnet. Auf diese Weise lassen sich also noch Stoffe unmittelbar vor dem Auftragen in das Reaktionsgemisch einbringen, was in vielen Fällen wünschenswert ist, wenn beispielsweise außerordentlich schnell reagierende chemische Substanzen oder abrasive Füllstoffe zugegeben werden sollen. Im letzten Falle bleibt insbesondere der empfindliche Mischkopf vor erhöhtem Verschleiß verschont.

Vorzugsweise verzweigt sich die Zuleitung und mündet an mehreren Stellen in das Rohr. Dadurch wird bereits eine Vorverteilung über die Länge des Rohres erreicht, so daß die Förderwege innerhalb des Rohres nicht so lang sind.

Es bietet sich an, die Rührelemente jeweils so anzuordnen, daß sie von jeder Einmündung nach beiden Seiten fördern. Ist eine Einmündung am Ende des Rohres angeordnet, so wird natürlich von dieser Einmündung nur in eine Richtung weggefördert.

In der Zeichnung ist die Vorrichtung in mehreren Ausführungsbeispielen rein schematisch dargestellt und nachstehend näher erläutert. Es zeigen:

Fig. 1 die Vorrichtung gemäß einer ersten Ausführungsform mit einem nach Art einer Gießharke über die Unterlage hin-und herwandernden Rohr mit einem als Stachelwelle ausgebildeten Rührer in der Seitenansicht bzw. in teilweisem Längsschnitt,

Fig. 2 die Vorrichtung gemäß Fig. 1 in der Draufsicht,

Fig. 3 das Rohr der Vorrichtung gemäß Fig. 1, 2 im Längsschnitt in vergrößerter Darstellung,

Fig. 4 einen Schnitt gemäß Linie A-B in Fig. 3,

Fig. 5 ein Rohr mit einem als Propellerrührer ausgebildeten Rührer im Längsschnitt,

Fig. 6 einen Schnitt gemäß Linie C-D in Fig. 5,

Fig. 7 ein Rohr mit einem als Schneckenwelle ausgebildeten Rührer im Längsschnitt,

Fig. 8 einen Schnitt gemäß Linie E-F in Fig. 7,

Fig. 9 ein Rohr, dessen Rührer schräg angestellte Rührscheiben aufweist, im Längsschnitt und

Fig. 10 einen Schnitt gemäß Linie G-H in Fig. 9.

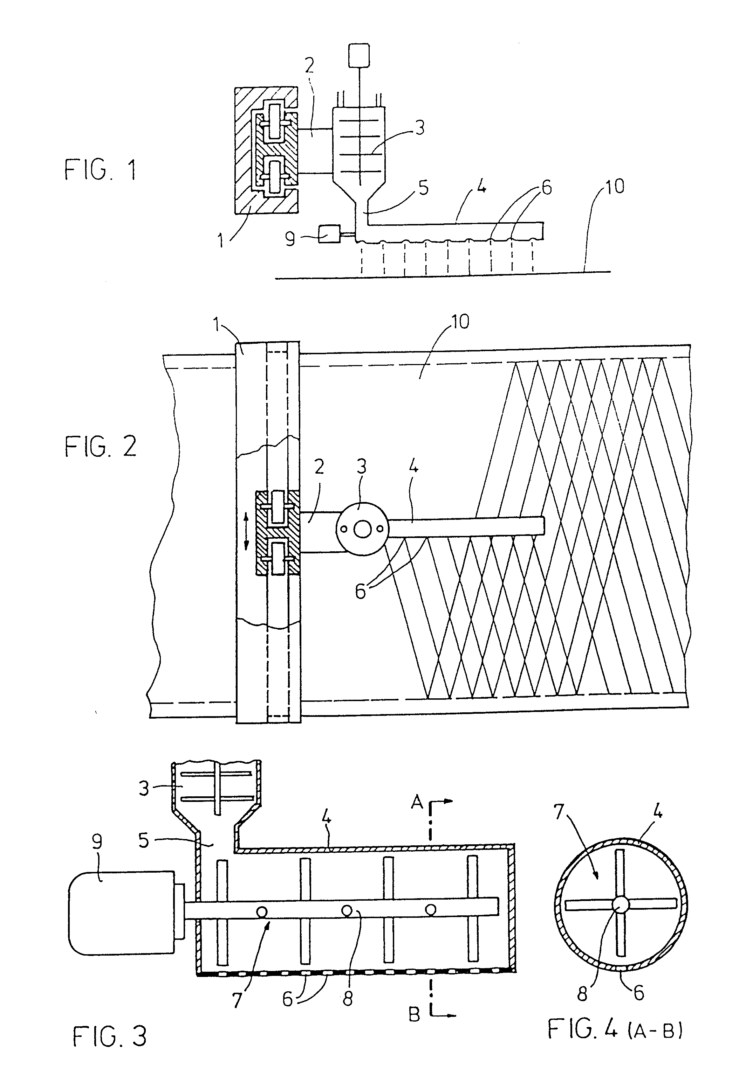

In Fig. 1 bis 4 ist über einem Einlauf eines nicht dargestellten Doppeltransportbandes eine an einer Traverse 1 hin-und herfahrbar angeordnete Halterung 2 vorgesehen. Diese Halterung 2 trägt einen Mischer 3 sowie ein Rohr 4, welches über eine Zuleitung 5 mit dem Mischer 3 in Verbindung steht und im Fachjargon als Gießharke bezeichnet wird. Dieses Rohr 4 erstreckt sich in Förderrichtung des Doppeltransportbandes, ist mit Auslaßöffnungen 6 versehen und enthält einen als Stachelrührer ausgebildeten Rührer 7, dessen Rührwelle 8 einen außerhalb des Rührers 4 angeordneten Antrieb 9 aufweist. Aus dem Rohr 4 wird das im Mischer 3 erzeugte Polyurethan-Reaktionsgemisch auf eine aus einer Papierbahn bestehende Unterlage 10 plaziert, wobei die Papierbahn auf einem nicht dargestellten endlosen Transportband transportiert wird.

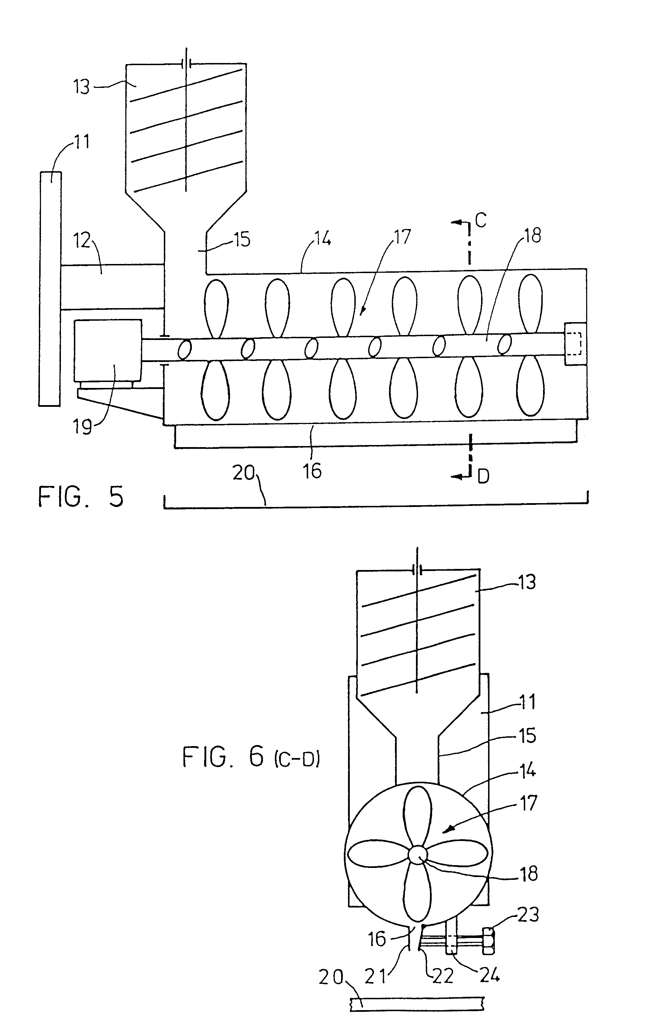

In Fig. 5, 6 ist die Vorrichtung über dem Einlauf eines nicht dargestellten Doppeltransportbandes an einer Strebe 11 mittels einer Halterung 12 befestigt. Diese trägt einen Mischer 13 sowie ein Rohr 14, in welches eine vom Mischer 13 abführende Zuleitung 15 mündet. Das Rohr 14 weist an seiner unteren Mantellinie eine als Schlitz ausgebildete Auslaßöffnung 16 auf. Im Rohr 14 ist ein als Stachelrührer ausgebildeter Rührer 17 angeordnet, dessen Rührwelle 18 außerhalb des Rührers 14 mit einem Antrieb 19 verbunden ist. Aus dem Rohr 14 fließt das im Mischer 13 erzeugte Polyurethan-Reaktionsgemisch durch die Auslaßöffnung 16 auf eine Unterlage 20. Die Auslaßöffnung 16 ist durch zwei Blenden 21, 22 begrenzt, von denen sich die Blende 21 mittels Stellschrauben 23, welcher sich an einem fixen Balken 24 abstützen, im Sinne einer Veränderung der Weite der Auslaßöffnung 16 verstellen läßt.

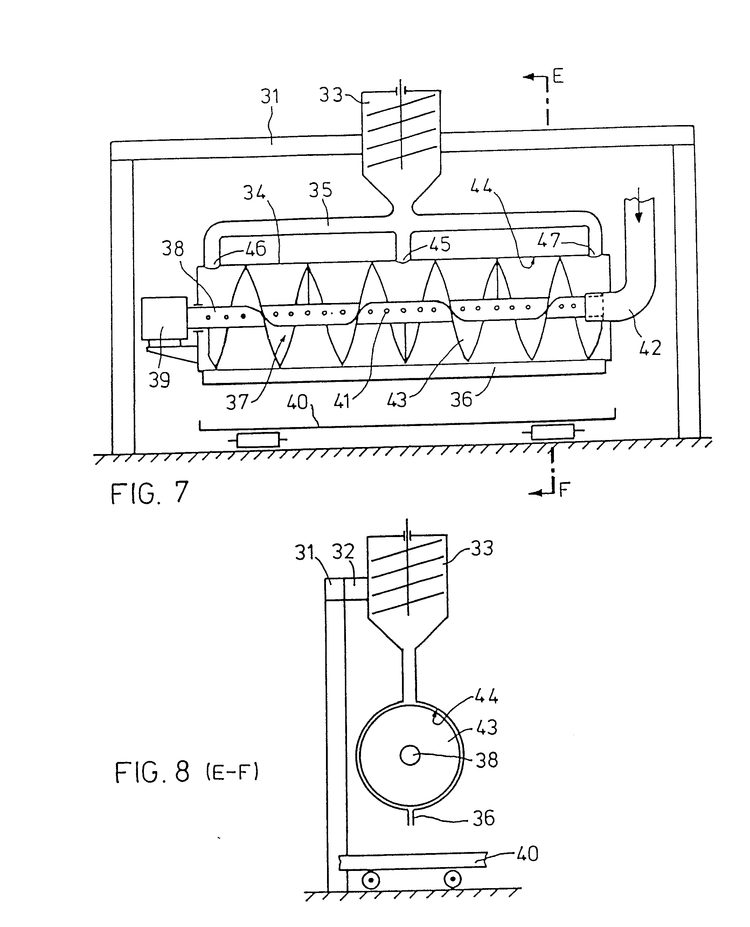

In Fig. 7, 8 ist die Vorrichtung über einem nicht dargestellten Gestell mit verfahrbarem Formkasten angeordnet. Sie besteht aus einer Traverse 31 mit Halterung 32 für einen Mischer 33 und eine Rohr 34. Vom Mischer 33 führt eine sich verzweigende Zuleitung 35 in das Rohr 34. Es weist an seiner tiefsten Stelle eine schlitzartige Auslaßöffnung 36 auf. Im Rohr 34 ist ein als Schneckenwelle ausgebildeter Rührer 37 angeordnet. Die Rührwelle 38 ist hohl ausgebildet und weist Auslaßöffnungen 41 auf. Sie steht einerseits mit einem Antrieb 39 und andererseits mit einer Beschickungsvorrichtung 42 für Luft in Verbindung. Die Luft wird im Rohr 34 in das Reaktionsgemisch eingemischt. Das mit Gas beladene Reaktionsgemisch wird auf eine Unterlage 40 aufgetragen. Der Rührer 37 ist derart gestaltet, daß der auf der Rührwelle 38 angeordnete Schneckensteg 43 die Innenwandung 44 des Rohres 34 bei jeder Umdrehung abstreift. Der Schneckensteg ist hinsichtlich seiner Förderrichtung in verschiedene Abschnitte derart unterteilt, daß von der mittigen Einmün dung 45 nach beiden Seiten und von den an den Enden des Rohres 34 vorgesehenen Einmündungen 46, 47 zur Mitte hin gefördert wird. Das heißt, die einzelnen Abschnitte des Schneckensteges 43 müssen dementsprechend rechtsgängig oder linksgängig sein.

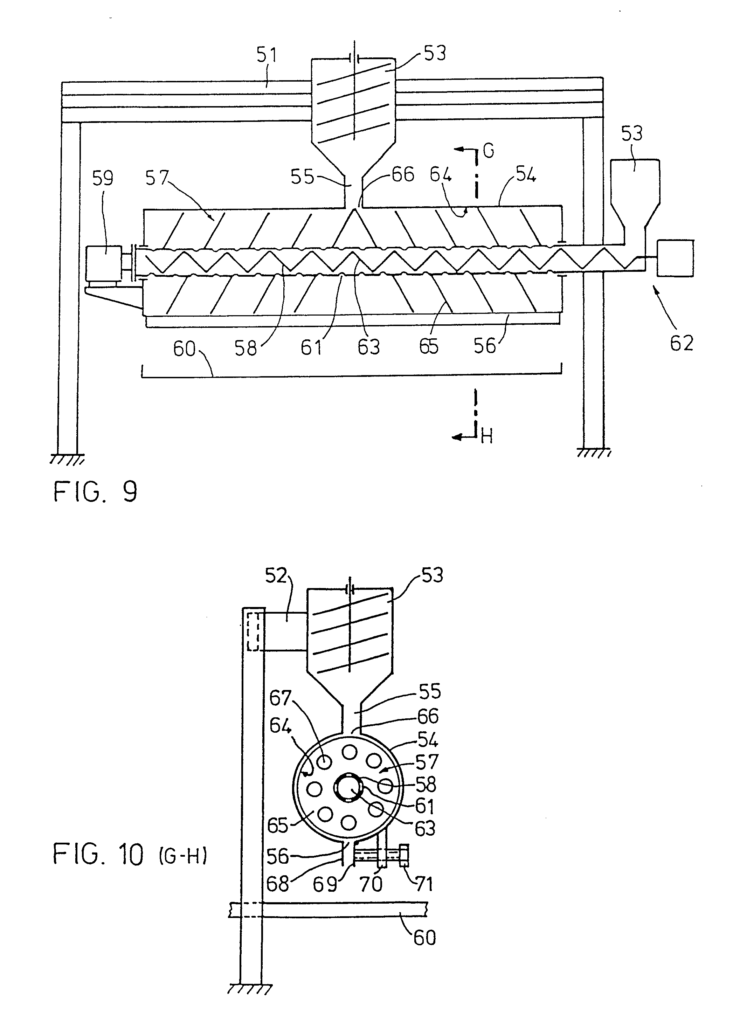

In Fig. 9, 10 ist die Vorrichtung über dem Einlauf eines nicht dargestellten Doppeltransportbandes vorgesehen. An einer Traverse 51 ist eine hin-und herfahrbare Halterung 52 angeordnet. Diese Halterung 52 trägt einen Mischer 53 sowie ein Rohr 54, wobei vom Mischer 53 eine Zuleitung 55 zum Rohr 54 führt. Das Rohr 54 weist eine Auslaßöffnung 56 auf und enthält einen Rührer 57, dessen Rührwelle 58 hohl gestaltet ist, Auslaßöffnungen 61 aufweist und außerhalb des Rohres 54 einerseits einen Antrieb 59 und andererseits eine Beschickungsvorrichtung 62 für Glaspulver aufweist. Innerhalb der Rührwelle 58 ist eine angetriebene Förderschnecke 63 angeordnet. Die Innenwandung 64 des Rohres 54 wird von den auf der Rührwelle 58 angeordneten Rührscheiben 65 bei jeder Umdrehung der Rührwelle 58 überstrichen, weil Anstellwinkel, Abstand und Stärke der Rührscheiben 65 derart aufeinander abgestimmt sind, daß die von den Rührscheiben bei eine Umdrehung beschriebenen Einhüllenden einander überlappen. Die Rührscheiben 65 sind so angeordnet, daß sie von der Einmündung 66 der Zuleitung 55 wegfördern. Um die Nachvermischung noch mehr zu aktivieren, sind in den Rührscheiben 65 Löcher 67 vorgesehen. Die schlitzartige Auslaßöffnung 56 ist in ihrer Weite einstellbar.

Sie ist durch zwei Blenden 68, 69 begrenzt. Dabei drücken gegen die elastische Blende 69 in einem Balken 70 gelagerte Stellschrauben 71, mit denen sich die Spaltweite einstellen läßt.

## Ansprüche

1. Vorrichtung zum Auftragen eines fließfähigen, Schaumstoff bildenden Reaktionsgemisches auf eine Unterlage (10, 20, 40, 60) zum Herstellen von Schaumstoffbahnen oder -platten, in Form eines Rohres (4, 14, 34, 54) mit mindestens einer Auslaßöffnung (6, 16, 36, 56), welcher über eine Zuleitung (5, 15, 35, 55) mit einem Mischer (3, 13, 33, 53) verbunden ist, dadurch gekennzeichnet, daß axial im Rohr (4, 14, 34, 54) ein Rührer (7, 17, 37, 57) angeordnet ist.

2. Vorrichtung nach Anspruch 1, dadurch gekennzeichnet, daß das Rohr (4) an einer quer über der Unterlage hin-und herfahrenden Halterung (12) angeordnet ist.

3. Vorrichtung nach Anspruch 1, dadurch gekennzeichnet, daß das Rohr (14, 34, 54) quer zur Unterlage (20, 40, 60) angeordnet ist.

4. Vorrichtung nach einem der Ansprüche 1 bis 3, dadurch gekennzeichnet, daß der Querschnitt der Auslaßöffnung (16, 56) einstellbar ist.

5. Vorrichtung nach einem der Ansprüche 1 bis 4, dadurch gekennzeichnet, daß der Rührer (7) als Stachelrührer (7) ausgebildet ist.

6. Vorrichtung nach einem der Ansprüche 1 bis 4, dadurch gekennzeichnet, daß der Rührer (17) als Propellerrührer (17) ausgebildet ist.

7. Vorrichtung nach einem der Ansprüche 1 bis 4, dadurch gekennzeichnet, daß der Rührer (37) als Schneckenwelle (37) ausgebildet ist.

8. Vorrichtung nach einem der Ansprüche 1 bis 4, dadurch gekennzeichnet, daß der Rührer (57) - schräg angestellte Rührscheiben (65) aufweist.

9. Vorrichtung nach einem der Ansprüche 1 bis 8, dadurch gekennzeichnet, daß Abstand, Breite und gegebenenfalls Schrägstellung der Rührelemente (43, 63) so aufeinander abgestimmt sind, daß während einer Umdrehung des Rührers (37, 57) die gesamte Innenwandung (44, 64) des Rohres (34, 54) selbstreinigend überstrichen wird.

10. Vorrichtung nach einem der Ansprüche 1 bis 9, dadurch gekennzeichnet, daß der Rührer (37, 57), hohl ausgebildet ist, innerhalb des Rohres (34, 54) Auslaßöffnungen (41, 61) aufweist und außerhalb des Rohres (37, 57) mit einer Beschickungsvorrichtung (42, 62) verbunden ist.

11. Vorrichtung nach einem der Ansprüche 1 bis 10, dadurch gekennzeichnet, daß sich die Zuleitung (35) verzweigt und mehrere Einmündungen (45, 46, 47) in das Rohr (34) aufweist.

0 277 573

FIG. 1

FIG. 2

FIG. 3

FIG. 4 (A-B)

FIG. 5

FIG. 6 (C-D)

FIG. 7

FIG. 8 (E-F)

0 277 573

FIG. 9

FIG. 10 (G-H)